# EUROPÄISCHE PATENTANMELDUNG

(11) **EP 2 787 585 A2**
(43) Veröffentlichungstag der Anmeldung: **08.10.2014**
(21) Anmeldenummer: 14162419.7
(22) Anmeldetag: 28.03.2014
(51) Int. Cl.: H02G 3/06, H02G 3/08

(54) **Kabelverschraubung**

(30) Priorität: 05.04.2013 CH 7272013
(71) Anmelder: Agro AG, 5502 Hunzenschwil (CH)
(72) Erfinder: Rettig, Hans Jörg, 5502 Hunzenschwil (CH)
(74) Vertreter: Rentsch Partner AG

(57) **Zusammenfassung**

Bei einer Kabelverschraubung (1) mit einer sich in axialer Richtung erstreckenden Durchgangsöffnung (3) für ein Kabel, umfassend einen Stutzen (2) mit einem Flansch (5), eine Befestigungsmutter (4) und einen Klemmeinsatz (9, 10, 18) zum Festklemmen des Kabels in der Durchgangsöffnung (3); wobei der Stutzen (2) einen inneren Axialabschnitt (6) mit einem Aussengewinde (7) aufweist; ist es erfindungsgemäss vorgesehen, dass die Kabelverschraubung (1) eine Druckmutter (8) umfasst, und dass die Befestigungsmutter (4) und die Druckmutter (8) mit dem Aussengewinde (7) des inneren Axialabschnitts (6) in Eingriff bringbar sind, wobei die Druckmutter (8) mit dem Klemmeinsatz (9, 10, 18) wirkverbunden ist, so dass sie eine axiale Kraft auf den Klemmeinsatz bewirkt.

## Beschreibung

### TECHNISCHES GEBIET

Die Erfindung betrifft eine Kabelverschraubung mit einer sich in axialer Richtung erstreckenden Durchgangsöffnung für ein Kabel, umfassend einen Stutzen mit einem Flansch, eine Befestigungsmutter und einen Klemmeinsatz zum Festklemmen des Kabels in der Durchgangsöffnung; wobei der Stutzen einen inneren Axialabschnitt mit einem Aussengewinde aufweist.

### STAND DER TECHNIK

Kabelverschraubungen zur Durch- oder Einführung eines Kabel in ein Gehäuse weisen einen durch eine Gehäuseöffnung durchführbaren Stutzen, eine Befestigungsmutter zur Befestigung des Stutzens in der Gehäuseöffnung, und einen Klemmeinsatz zum Festklemmen des Kabels in der Durchgangsöffnung der Kabelverschraubung auf.

Typischerweise sind die Kabelverschraubungen derart aufgebaut, dass sie von der Innenseite des Gehäuses mit der Befestigungsmutter gehalten werden und dass von Aussen her ein Druckelement am Stutzen aufgeschraubt wird, welcher auf den Klemmeinsatz zum Festklemmen des Kabels einwirkt. Dies Ausführungsformen bauen nach aussen und sind daher anfällige für Vandalenakte oder Manipulationen von aussen. Zudem bieten sie eine grosse Oberfläche mit Taschen, Rillen und Hohlräumen für Schmutzablagerungen und sind daher für Anwendungen in Reinräumen oder in der Lebensmittel- oder Pharmaindustrie, wo die Hygiene äusserst wichtig ist, nicht geeignet.

Aus DE102010031345 ist eine vandalensichere Kabelverschraubung zur Ein- und Durchführung, Abdichtung und Zugentlastung von Kabeln bekannt, welche nach innen baut. Die Kabeldurchführung umfasst an einem ersten Ende einen Stutzen mit einem ersten, einem zweiten und einem dritten Axialabschnitt, wobei der erste Axialabschnitt zumindest abschnittsweise einen grösseren Querschnittsradius aufweist als der zweite Axialabschnitt und an der Aussenseite eines Gehäuses anliegt. Der zweite Axialabschnitt befindet sich dabei in der Gehäuseöffnung. Weiter umfasst sie ein Befestigungselement (z.B. eine Gegenmutter), welches auf den dritten Axialabschnitt befestigbar ist, um die Kabelverschraubung in der Gehäuseöffnung zu halten. Der aussen am Gehäuse anliegende erste Axialabschnitt weist eine abgeflachte konische Form auf ohne für ein Heraushebeln oder -drehen geeignete Wirkangriffsfläche. Zur Fixierung eines Kabels weist die Kabelver-schraubung einen Klemmeinsatz auf. Der Klemmeinsatz umfasst einen Elastomer-Dichtungszylinder und ein Druckelement, welches vom zweiten Ende her über eine Innengewinde im dritten Axialabschnitt des Stutzens in den Stutzen eingeschraubt wird. Das Druckelement drückt dabei den Elastomer-Dichtungszylinder in einen im ersten Axialabschnitt angeordneten Innenkonus, um das Kabel dichtend zu halten. Nachteilig an dieser Kabelverschraubung ist jedoch, dass sie aufgrund der hintereinander angeordneten Bauteile eine grosse Bauhöhe aufweist und somit viel Platz in einem Gehäuse, insbesondere beim Anbringen des Kabels, beansprucht.

WO94/18734 zeigt eine weitere Kabelverschrauben, welche nach innen baut, um ein Abbrechen aufgrund äusserer Einflüsse zu verhindern. Die Kabelverschraubung umfasst einen Stutzen mit einem äusseren trichterförmigen Axialabschnitt und einem inneren Axialabschnitt mit Innengewinde zum Einschrauben eines Druckelements, welches auf einen Dichtungszylinder wirkt. Zur Zugentlastung wird das Kabel zusätzlich mittels einer Druckschraube im Druckelement befestigt. Nachteilig an dieser Kabelverschraubung ist ebenfalls, dass sie aufgrund der hintereinander angeordneten Bauteile eine grosse Bauhöhe aufweist.

### DARSTELLUNG DER ERFINDUNG

Eine Aufgabe der Erfindung ist es, eine Kabelverschraubung anzugeben, welche einfach und kostengünstig herstellbar ist und einen in axialer Richtung kurzen Aufbau aufweist. Weiter soll die Kabelverschraubung auf einfache Weise für verschiedene Anwendungen, wie z.B. mit/ohne EMV-Schutz oder für Kabel mit Schutzschlauch, umrüstbar sein.

In einer Ausführungsform umfasst die Kabelverschraubung eine Druckmutter und eine Befestigungsmutter. Druckmutter und Befestigungsmutter sind mit demselben Aussengewinde des inneren Axialabschnitts in Eingriff bringbar, wobei die Druckmutter mit dem Klemmeinsatz wirkverbunden ist. Die Druckmutter bewirkt dabei eine axiale Kraft auf den Klemmeinsatz.

Indem die Druckmutter auf das Aussengewinde aufgeschraubt wird, ist sie in axialer Richtung auf etwa gleicher Höhe mit dem Klemmeinsatz angeordnet. Auf diese Weise ist ein kurzer Aufbau der Kabelverschraubung möglich. Zudem erlaubt die erfindungsgemässe Kabelverschraubung einen inneren Axialabschnitt, welcher im Inneren gewindefrei ist. Ein Fehlen eines Innengewindes im inneren Axialabschnitt des Stutzens, erlaubt, dass der Stutzen einfacher herstellbar ist und der innere Axialabschnitt zudem eine geringere Wandstärke aufweisen kann, da lediglich Material für eine Aussengewinde vorhanden sein muss. Das Aussengewinde kann z.B. ein Feingewinde sein.

Eine glatte Oberfläche im Innern des Axialabschnitts des Stutzens ermöglicht zudem eine bessere Dichtwirkung und eine bessere Verschiebbarkeit des Klemmeinsatzes, weil er nicht, z.B. mit einem Innengewinde, verklemmen kann.

Weiter kann der gesamte Innenraum für den Klemmeinsatz verwendet werden, welche eine durch die Druckmutter erzeugte axiale Kraft aufnimmt und in eine radiale nach innengerichtete Klemmkraft umsetzt, was wiederum einen kurzen Aufbau erlaubt. Auch können verschiedene Klemmeinsätze für verschiedene Anwendungen der Kabelverschraubung eingesetzt werden, ohne dass die äusseren Bauteile (Stutzen, Befestigungsmutter, Druckmutter) für die verschiedenen Anwendungen in deren Form angepasst werden müssen.

Um beim Anbringen der Druckmutter auf das Aussengewinde des inneren Axialabschnitts eine axiale Kraft auf den Klemmeinsatz zu übertragen, weist die Druckmutter vorzugsweise einen radial nach innen gerichteten Flansch auf. Der Innenradius des Flanschs entspricht in der Regel etwa dem Innenradius der Durchgangsöffnung des Klemmeinsatzes und ist kleiner als der Innenradius des inneren Axialabschnitts des Stutzens. Um die Reibung zwischen Druckmutter und Klemmeinsatz zu verringern und ein Mitdrehen des Klemmeinsatzes beim Aufbringen der Druckmutter zu verhindern, kann zwischen Druckmutter und Klemmeinsatz eine ringförmige Gleitscheibe angeordnet sein.

Eine andere Variante, um eine axiale Kraft auf den Klemmeinsatz zu übertragen, besteht darin, dass der Klemmeinsatz eine Druckhülse mit radial nach aussen gerichteten Stiften umfasst, welche in axialen Schlitzen des inneren Axialabschnitts geführt sind und radial über den inneren Axialabschnitt vorstehen. Beim Aufschrauben der Druckmutter werden die Stifte und somit die Druckhülse in axialer Richtung verschoben. Gleichzeitig wird ein Verdrehen des Klemmeinsatzes durch die geführten Stifte verhindert.

Der Klemmeinsatz kann ein Dichteinsatz sein, welcher durch die auf ihn wirkende axiale Kraft radial nach innen zusammengedrückt wird. Um eine optimale Kraftübertragung zu bewirken, kann der Klemmeinsatz eine Druckhülse und einen Dichteinsatz aufweisen, wobei die Druckhülse zwischen dem Dichteinsatz und der Druckmutter angeordnet ist. Die Druckhülse ist in der Durchgangsöffnung des Stutzens in axialer Richtung verschiebbar, so dass sie einen durch die Druckmutter erzeugte axiale Kraft auf den Dichteinsatz übertragen kann. Diese axiale Verschiebbarkeit wird durch eine gewindefreie resp. glatte innere Oberfläche des Stutzens gefördert. Um zusätzliche eine geringere Reibung zwischen innere Oberfläche des Stutzens und der äusseren Mantelfläche der Druckhülse zu erreichen, können eine oder beide Flächen mit reibungsreduzierenden Beschichtungen, z.B. Wachs, versehen sein.

Vorzugsweise weist der Stutzen im Bereich des Flansches einen Innenkonus auf. Der Innenkonus setzt die axiale Kraft, welche auf den Klemmeinsatz wirkt, in eine radial nach innen gerichtet Klemmkraft um, indem der Dichteinsatz zusammengepresst wird und so das Kabel dichtend gehalten wird.

Im montierten Zustand der Kabelverschraubung in einer Gehäuseöffnung ist der Flansch ausserhalb des Gehäuses angeordnet und liegt, vorzugsweise mit einer zwischenliegenden Dichtung, an der Gehäusewandung an. Um für mögliche Vandalenakte oder Schmutzablagerungen keine Angriffsfläche zu bieten, weist der Flansch in axialer Richtung eine geringe Bauhöhe auf, vorzugsweise in Form eines Aussenkonus auf. Der Aussenkonus kann dabei direkt in die Durchgangsöffnung übergehen, so dass keine Ecken für Schmutzablagerungen vorhanden sind. Der Winkel des Aussenkonus kann dabei etwa 20 Grad betragen. Der Stutzen mit Innen- und Aussenkonus erlaubt eine besonders flache und leichte Bauweise für den im montierten Zustand gehäuseaussenseitigen Bereich des Stutzens. Zudem ist der Dichteinsatz im Innern des Stutzens derart angeordnet, dass die Dichtwirkung direkt am Eingang der Durchgangsöffnung erzielt wird und dabei kein Raum für Schmutzablagerungen entsteht. Auf diese Weise ist die Kabelverschraubung besonders für Anwendungen in Reinräumen und im Lebensmittel- und Pharmabereich geeignet.

Gehäuseseitig weist der Flansch vorzugsweise einen Dichtring, z.B. ein O-Ring, auf. Zur Aufnahme des Dichtrings kann der Flansch gehäuseseitig mit einer radial umlaufenden Nut versehen sein, in welche der Dichtring eingelegt ist. Um eine optimale Dichtung zu erreichen bei der zwischen dem Flansch und der Gehäusewandung kein Spalt vorhanden ist, kann der Dichtring einen L-förmigen Querschnitt aufweisen. Dabei weist der Dichtring eine radial umlaufende Feder auf, welche in die Nut des Flanschs eingreift, und der äussere Durchmesser des Dichtrings entspricht etwa dem äusseren Durchmesser des Flanschs. Die L-förmige Dichtung kann ein Ausweichen der Dichtung vermeiden.

Der innere Axialabschnitt des Stutzens, welcher zur Montage durch eine Gehäuseöffnung mit leicht grösserem Durchmesser gesteckt wird, befindet sich im montierten Zustand innerhalb des Gehäuses. Zur Befestigung des Stutzens in der Gehäuseöffnung wird eine Befestigungsmutter auf das Aussengewinde des inneren Axialabschnitts geschraubt, mit welcher die Gehäusewandung zwischen Flansch und Befestigungsmutter festgeklemmt wird. Der Dichtring erhöht dabei zusätzlich die Klemmwirkung. Um beim Anbringen der Befestigungsmutter den Stutzen verdrehsicher zu halten, können der Flansch und/oder der innere Axialabschnitt ein Verdrehsicherungsmittel aufweisen. Das Verdrehsicherungsmittel kann z.B. eine Abflachung des inneren Axialabschnitts in einem an den Flansch anschliessenden Bereiche sein, wobei die Abflachung den Stutzen in einer Gehäuseöffnung mit komplementärer Abflachung verdrehsicher hält. Das Verdrehsicherungsmittel kann auch am freien Ende des inneren Axialabschnitts angeordnet sein und z.B. mindestens zwei radial gegenüberliegende Einschnitte oder Abflachungen aufweisen, wobei diese derart ausgebildet sind, dass Befestigungsmutter und Druckmutter über die Verdrehsicherungsmittel auf das Aussengewinde aufschraubbar sind.

Die Verdrehsicherungsmittel können auch am Flansch des Stutzens angeordnet sein, beispielsweise in Form von Vertiefungen, Schlitzen oder Abflachungen in der Stirnseite, oder Abflachungen im Querschnitt, z.B. Aussensechskant.

Die Verdrehsicherungsmittel am Flansch oder am freien Ende des inneren Axialabschnitts zeigen den Vorteil, dass die Gehäuseöffnung nicht eine komplementäre Form aufweisen muss, sondern kreisförmig ausgebildet sein kann. Zudem Wirken keine Kräfte auf die Gehäusewandung, welche durch Verziehen oder Verbiegen der Gehäusewandung diese beschädigen können und möglicherweise die Dichtheit der Kabelverschraubung herabsetzen.

Für EMV Anwendungen weist die Befestigungsmutter vorzugsweise gehäuseseitig eine Verzahnung auf. Diese Verzahnung kann mögliche, elektrisch nichtleitende Beschichtungen der Gehäusewandung aufreissen und dabei die Kontaktierung der Gehäusewandung gewährleisten. Ebenfalls für EMV Anwendungen, kann der Klemmeinsatz weiter eine Kontakthülse zur Kontaktierung EMV abgeschirmter Kabel aufweist, welche innerhalb der Druckhülse angeordnet ist. Die EMV-Ummantelung kann dabei zur Kontaktierung zwischen Druckhülse und Kontakthülse eingeklemmt werden.

Wird die Kabelverschraubung für Kabel mit Schutzschläuchen verwendet kann sie zusätzlich eine Anschlusshülse zur Montage von Schutzschläuchen aufweisen. Die Anschlusshülse weist bevorzugt einen radial schräg nach aussen gerichteten Flansch auf, mit welchem die Anschlusshülse zwischen dem Innenkonus des Stutzens und dem Dichteinsatz eingeklemmt ist. Der vordere Bereich der Hülse ragt aus der Durchgangöffnung hervor und weist vorzugsweise eine umlaufende Rippe zum Halten des Schutzschlauchs auf. Zur besseren Abdichtung kann zwischen Anschlusshülse und Stutzen ein weiterer Dichtring vorgesehen sein.

Die erfindungsgemässe Kabelverschraubung kann für verschieden Anwendungen eingesetzt werden, indem lediglich der Klemmeinsatz ausgetauscht wird oder eine Anschlusshülse im Bereich des Flanschs des Stutzens eingesetzt wird.

Die Bauteile der Kabelverschraubung, abgesehen von den Dichtungen und dem Gleitring, d.h. insbesondere der Stutzen, die Befestigungsmutter, die Druckmutter, die Druckhülse, die Kontakthülse und die Anschlusshülse, können je nach Bedarf jeweils aus einem Material, ausgewählt aus Stahl, insbesondere rostfreiem oder säurebeständigem Stahl, Messing, vorzugsweise vernickelt, und Kunststoff, gefertigt sein. Dabei müssen nicht alle Bauteile die gleichen Materialien aufweisen. Beispielsweise kann ein Stutzen aus säurebeständigem Stahl mit den restlichen Bauteilen aus Messing kombiniert sein. Der Dichteinsatz und der Dichtring können je nach Bedarf jeweils aus einem Material, ausgewählt aus thermoplastischem Elastomer (TPE), Akrylkautschuk (NBR) und Fluorocarbon-Elastomer (FPM), gefertigt sein. Die Gleitscheibe ist vorzugsweise aus Kunststoff, z.B. Teflon, gefertigt.

Die erfindungsgemässe Kabelverschraubung kann anstelle der Befestigungsmutter auch andere Befestigungselemente aufweisen, mit welchem der Stutzen in einer Gehäusewandung befestigbar ist. Das Befestigungselement muss dabei nicht mit dem Aussengewinde in Eingriff bringbar sein. Beispielsweise kann der Stutzen zwei radial gegenüberliegende quer zur axialen Richtung verlaufende Nuten aufweisen, in welche ein Sprengring oder ein Schieber mit einer U-förmigen Öffnung eingeschoben wird.

### KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:
- Fig. 1: unter (a) eine perspektivische Vorderansicht und unter (b) eine perspektivische Hinteransicht einer erfindungsgemässen Kabelverschraubung;
- Fig. 2: unter (a) eine Vorderansicht, unter (b) eine Schnittansicht entlang der Schnittlinie A-A und unter (c) ein Detailvergrösserung einer Ausführungsform der erfindungsgemässen Kabelverschraubung;
- Fig. 3: eine Explosionsdarstellung der Kabelverschraubung aus Fig. 2;
- Fig. 4: eine perspektivische Vorderansicht einer erfindungsgemässen Kabelverschraubung mit Anschlusshülse;
- Fig. 5: unter (a) eine Vorderansicht, unter (b) eine Schnittansicht entlang der Schnittlinie B-B und unter (c) ein Detailvergrösserung einer weiteren Ausführungsform der erfindungsgemässen Kabelverschraubung;
- Fig. 6: eine Explosionsdarstellung der Kabelverschraubung aus Fig. 5; und
- Fig. 7: Varianten des Verdrehsicherungsmittels am Stutzen.

### WEGE ZUR AUSFÜHRUNG DER ERFINDUNG

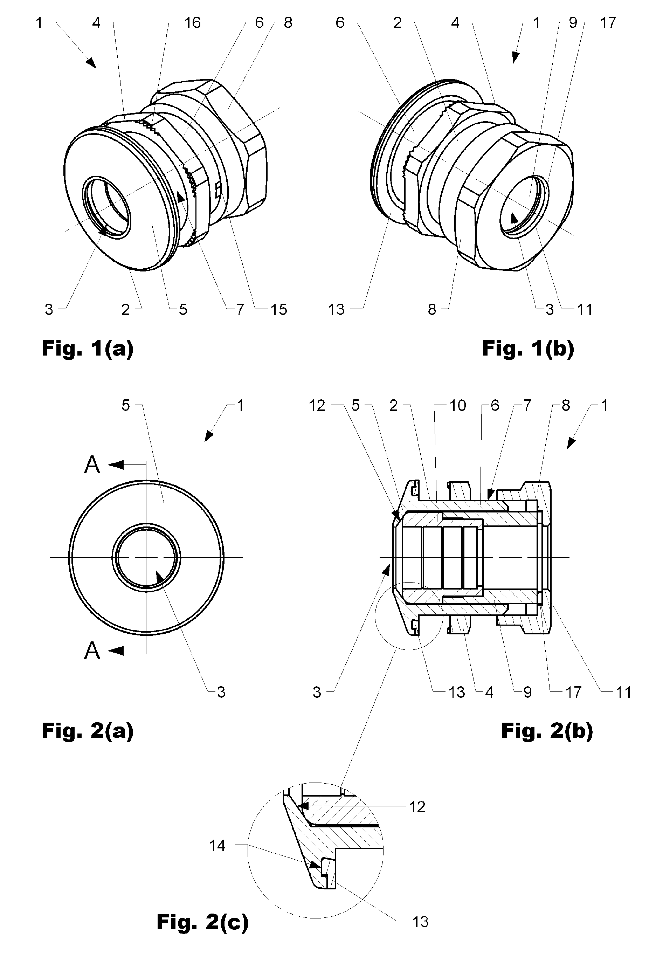

Fig. 1 zeigt unter (a) eine perspektivische Vorderansicht und unter (b) eine perspektivische Hinteransicht einer erfindungsgemässen Kabelverschraubung. Die Kabelverschraubung 1 weist eine in axialer Richtung verlaufende Durchgangsöffnung 3 für ein Kabel (nicht gezeigt) auf. Weiter umfasst sie einen zylindrischen Stutzen 2 mit einem Flansch 5 und einem inneren Axialabschnitt 6. Der Durchmesser der Durchgangöffnung 3 im vorderen Bereich des Stutzens ist kleiner als der Innendurchmesser des inneren Axialabschnitts 6. Der innere Axialabschnitt 6 weist ein Aussengewinde 7 auf, auf welches eine Befestigungsmutter 4 zur Montage der Kabelverschraubung an einem Gehäuse (nicht gezeigt) und eine Druckmutter 8 zum Festklemmen des Kabels in der Durchgangsöffnung 3 aufgeschraubt wird. Zum Festklemmen des Kabels ist zudem im Innern der Kabelverschraubung ein Klemmeinsatz angeordnet, welcher weiter unten noch beschrieben wird.

Zur Montage wird die Kabelverschraubung mit dem inneren Axialabschnitt durch eine Gehäuseöffnung gesteckt, wobei die Gehäusewandung zwischen dem Flansch 5 und der Befestigungsmutter 4 festgeklemmt wird. Die Befestigungsmutter 4 kann eine Verzahnung für EMV Anwendungen aufweisen. Um beim Befestigen der Kabelverschraubung den Stutzen gegen Verdrehung zu sichern, weist der innere Axialabschnitt 6 am freien Ende zwei radial gegenüberliegende Schlitze 15 (Verdrehsicherungsmittel) auf, mittels welchen der Stutzen mit geeignetem Werkzeug verdrehsicher gehalten werden kann.

Der Flansch 5 weist gehäuseseitig einen Dichtring 13 auf, um den Stutzen 2 gegenüber dem Gehäuse abzudichten. Im Innern weist die Kabelverschraubung einen Klemmeinsatz auf, welcher weiter unten beschrieben wird. An der vom Gehäuse abgewandten Seite ist der Flansch konusförmig. Der Aussenkonus führt dabei direkt in die Durchgangsöffnung über und weist eine glatte Oberfläche auf, so dass keine Taschen, Rillen oder Hohlräume für Schmutzablagerungen vorhanden sind. Vorzugsweise ist der Aussenkonus flach ausgebildet mit einem Neigungswinkel von etwa 20 Grad. Der Aussenkonus bietet daher auch keine Angriffsfläche für Vandalenakte.

Fig. 2 zeigt eine Ausführungsform der erfindungsgemässen Kabelverschraubung mit einem Klemmeinsatz 9, 10 zur Abdichtung und Zugentlastung von Kabel. Unter (a) ist eine Vorderansicht, unter (b) eine Schnittansicht entlang der Schnittlinie A-A aus Fig. 2(a) und unter (c) ein Detailvergrösserung eines Ausschnitts aus Fig. 2(b) gezeigt. In der Vorderansicht ist der Stutzen 2 mit radial umlaufendem Flansch 5 und mit der in axialer Richtung verlaufenden Durchgangsöffnung 3 für ein Kabel sichtbar. Die Stirnseite und der Flansch 5 des Stutzens 3 weisen eine glatte Oberfläche auf, so dass sie keine Möglichkeit für ein Angreifen mit einem Werkzeug bieten.

In der Schnittdarstellung der Fig. 2(b) ist der Klemmeinsatz 9, 10 erkennbar, welcher in dieser Ausführungsform einen Dichteinsatz 9 und eine Druckhülse 10 umfasst. Der Dichteinsatz 10 und die Druckhülse 9 weisen den gleichen maximalen Aussendurchmesser auf, welcher im Wesentlichen dem Innendurchmesser des inneren Axialabschnitts des Stutzens entspricht, so dass der Klemmeinsatz 9, 10 in axialer Richtung verschiebbar ist. Dichteinsatz 10 und Druckhülse 9 sind derart ausgestaltet, dass sie auf Stoss miteinander wirkverbunden sind. Dabei kann ein Abschnitt des Dichteinsatzes 10 mit einem geringeren Aussendurchmesser teilweise von der Druckhülse umgeben sein, so dass sich einer Überblattung ergibt.

Die Druckmutter 8 ist hülsenförmig mit einem Innengewinde ausgebildet. An der vom Flansch 5 des Stutzens 2 entfernten Seite weist sie einen radial nach innen gerichteten Flansch 11 auf. Der Flansch 11 hat einen Innenradius, welcher in etwa dem Radius Durchgangsöffnung 3 des Klemmeinsatzes 9, 10 entspricht und kleiner als der Innenradius des inneren Axialabschnitts 6 ist. Auf diese Weise ist der Flansch 11 beim Aufschrauben der Druckmutter 8 auf das Aussengewinde 7 des inneren Axialabschitts 6 mit dem Klemmeinsatz 9, 10 wirkverbunden. Die Druckmutter 8 erzeugt dabei eine axiale Kraft auf den Klemmeinsatz 9, 10 welcher in Richtung des Flansches 5 gedrückt wird. Druckmutter 8 und Klemmeinsatz 9, 10 sind also nicht hintereinander angeordnet, sondern überlappen in axialer Richtung teilweise miteinander, was einen kürzeren Aufbau der Kabelverschraubung erlaubt. Weiter weist die Druckmutter einen radial nach aussen gerichteten, als Sechskant ausgebildeten Flansch auf. Andere Mittel zum Einleiten eines Drehmoments sind auch möglich.

Zur Verringerung der Reibung ist eine ringförmige Gleitscheibe 17 zwischen dem Flansch 11 der Druckmutter 8 und der Druckhülse 9 angeordnet, welche vorzugsweise in einen dafür vorgesehenen Falz im Flansch 11 eingelegt ist.

Um die notwendig Klemmkraft zum Halten des Kabels zu erzielen, weist der Stutzen 3 im Bereich des Flanschs 5 einen Innenkonus 12 auf (vgl. Fig.2(c)). Der Innenkonus setzt die axiale Kraft, welche auf den Klemmeinsatz wirkt, in eine radial nach innen gerichtet Klemmkraft um, indem der Dichteinsatz zusammengepresst wird und so das Kabel dichtend gehalten wird.

Fig. 2(c) zeigt eine Vergrösserung eines Ausschnitts des Flanschs 5 des Stutzens 3 mit einem Dichtring 13. Der Flansch 5 weist gehäuseseitig eine radial umlaufende Nut 14 auf. Der Dichtring 13 weist einen L-förmigen Querschnitt mit einer radial umlaufenden Feder auf, welche in die Nut 14 eingreift. Der Aussendurchmesser des Dichtrings 13 entspricht dem Aussendurchmesser des Flanschs 5, so dass bei montierter Kabelverschraubung kein Spalt oder keine Rille zwischen Flansch 5 und Gehäsuewandung vorhanden ist.

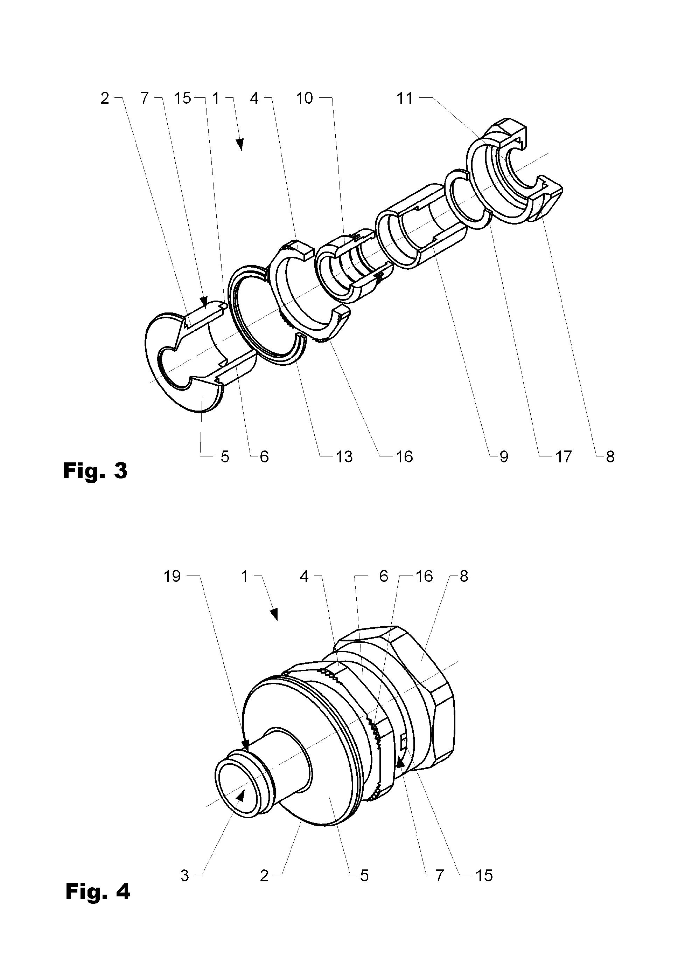

Fig. 3 zeigt eine teilweise geschnittene Explosionsdarstellung der Kabelverschraubung aus Fig. 2 mit zweiteiligem Klemmeinsatz 9, 10.

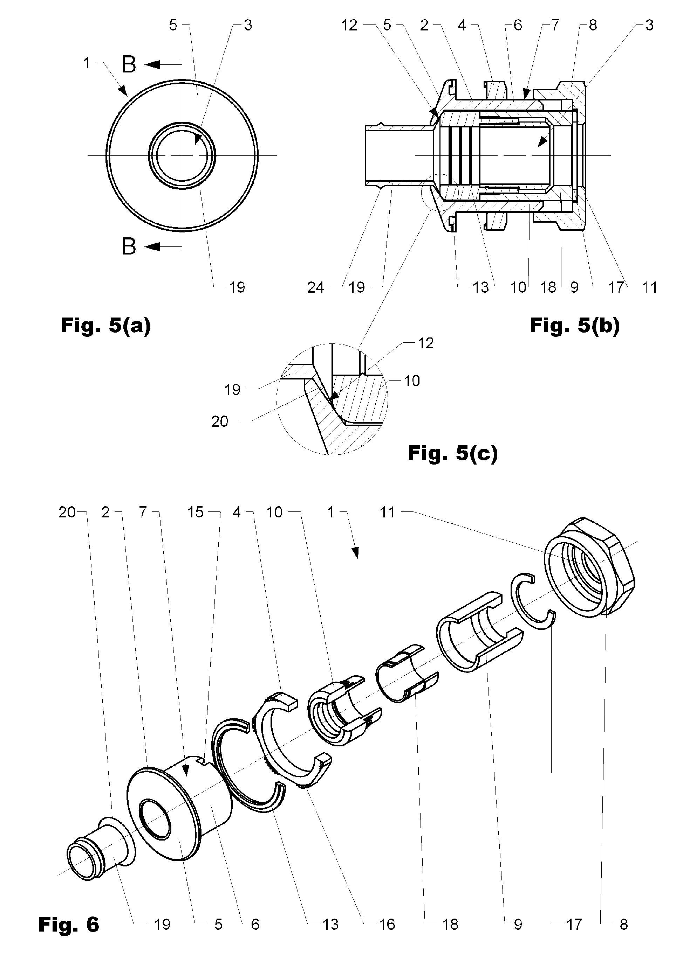

Fig. 4 zeigt eine perspektivische Vorderansicht einer erfindungsgemässen Kabelverschraubung 1 mit einer Anschlusshülse 19. Die Anschlusshülse 19 kann wahlweise im vorderen Bereich des Stutzens 3 eingesetzt werden, wenn die Kabelverschraubung 1 für Kabel mit Schutzschläuchen verwendet werden soll. Die Anschlusshülse 19 weist an einem Ende einen radial schräg nach aussen gerichteten Flansch 20 auf, mit welchem die Anschlusshülse 19 zwischen dem Innenkonus 12 des Stutzens 3 und dem Dichteinsatz 10 eingeklemmt ist (vgl. Fig. 5(c)). Der vordere Bereich der Anschlusshülse 19 ragt aus der Durchgangöffnung 3 hervor und weist vorzugsweise eine umlaufende Rippe 24 zum Halten des Schutzschlauchs auf. Zur besseren Abdichtung kann zwischen Anschlusshülse 19 und Stutzen 3 ein weiterer Dichtring vorgesehen sein.

Fig. 5 zeigt eine Ausführungsform der erfindungsgemässen Kabelverschraubung mit einem Klemmeinsatz 9, 10, 18 zur Abdichtung und Zugentlastung von Kabel, welcher auch für EMV Anwendungen geeignet ist. Weiter weist die Kabelverschraubung die wahlweise einsetzbare Anschlusshülse 19 auf. Unter (a) ist eine Vorderansicht, unter (b) eine Schnittansicht entlang der Schnittlinie B-B der Fig. 5(a) und unter (c) ein Detailvergrösserung eines Ausschnitts aus Fig. 5(b) gezeigt.

In der Vorderansicht ist der Stutzen 2 mit radial umlaufendem Flansch 5 und mit der in axialer Richtung verlaufenden Durchgangsöffnung 3 für ein Kabel sichtbar. Die Stirnseite und der Flansch 5 des Stutzens 3 weisen eine glatte Oberfläche auf, so dass sie keine Möglichkeit für ein Angreifen mit einem Werkzeug bieten.

In der Schnittdarstellung der Fig. 5(b) ist der Klemmeinsatz 9, 10, 18 erkennbar, welcher in dieser Ausführungsform im Unterschied zum Klemmeinsatz 9, 10 aus Fig. 2 zusätzlich eine Kontakthülse 18 zur Kontaktierung EMV abgeschirmter Kabel aufweist. Die Kontakthülse 18 ist innerhalb der Druckhülse angeordnet und wird vom Dichteinsatz 10 gehalten. Zwischen Kontakthülse 18 und Druckhülse 9 ist ein Spalt vorhanden, in welchem die EMV-Ummantelung eingeklemmt werden kann.

Fig. 6 zeigt eine teilweise geschnittene Explosionsdarstellung der Kabelverschraubung aus Fig. 5 mit dreiteiligem Klemmeinsatz 9, 10, 18 für EMV-Anwendungen und einer Anschlusshülse 19 für Schutzschläuche.

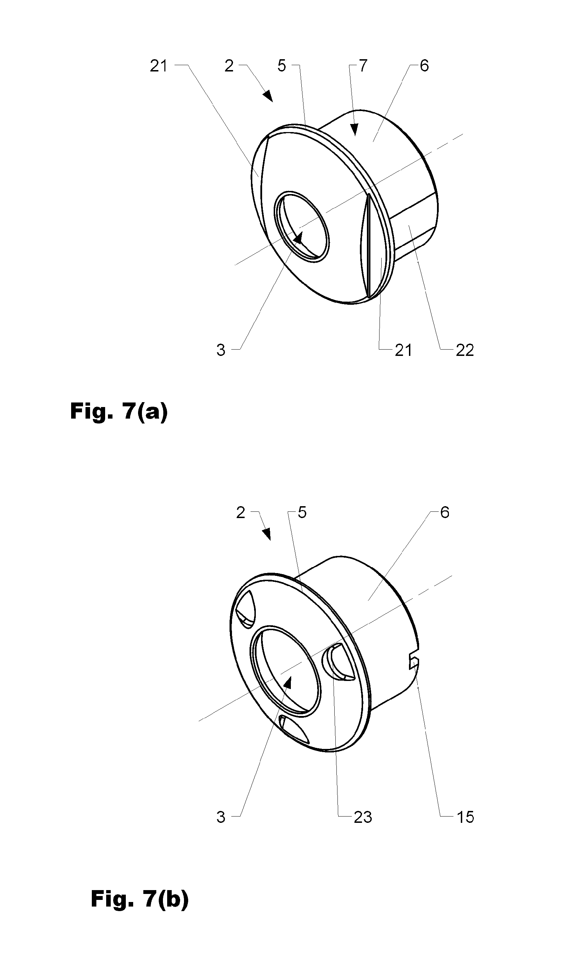

In den Fig. 7(a) und 7(b) sind weitere Varianten für Verdrehsicherungsmittel gezeigt, welche einzeln oder in Kombination miteinander vorliegen können. Fig. 7(a) zeigt einen Stutzen 2, welcher stirnseitig am Flansch 5 zwei Abflachungen 21 aufweist, die mit einem Spezialwerkzeug gehalten werden können. Am inneren Axialabschnitt, welcher das Aussengewinde 7 aufweist, sind ebenfalls zwei radial gegenüberliegende Abflachungen vorgesehen. Fig. 7(b) zeigt einen Stutzen, welcher am freien Ende des inneren Axialabschnitts 6 zwei radial gegenüberliegende Schlitze 15 aufweist, die bereits oben erläutert wurden. Eine weitere Variante eines Verdrehsicherungsmittels ist ebenfalls in Fig. 7(b) gezeigt, nämlich stirnseitige Vertiefungen 23 im Flansch 5 des Stutzens 2.

**BEZEICHNUNGSLISTE**

| | | | |
|---|---|---|---|
| 1 | Kabelverschraubung | 13 | Dichtring |
| 2 | Stutzen | 14 | Nut |
| 3 | Durchgangsöffnung | 15 | Schlitz |
| 4 | Befestigungsmutter | 16 | Verzahnung |
| 5 | Flansch | 17 | Gleitscheibe |
| 6 | inneren Axialabschnitt | 18 | Kontakthülse |
| 7 | Aussengewinde | 19 | Anschlusshülse |
| 8 | Druckmutter | 20 | Flansch |
| 9 | Druckhülse | 21 | Abflachung |
| 10 | Dichteinsatz | 22 | Abflachung |
| 11 | Flansch | 23 | Vertiefung |
| 12 | Innenkonus | 24 | Rippe |

## Patentansprüche

1. Kabelverschraubung (1) mit einer sich in axialer Richtung erstreckenden Durchgangsöffnung (3) für ein Kabel, umfassend einen Stutzen (2) mit einem Flansch (5), eine Befestigungsmutter (4) und einen Klemmeinsatz (9, 10, 18) zum Festklemmen des Kabels in der Durchgangsöffnung (3); wobei der Stutzen (2) einen inneren Axialabschnitt (6) mit einem Aussengewinde (7) aufweist;
**dadurch gekennzeichnet, dass**
die Kabelverschraubung (1) eine Druckmutter (8) umfasst, und dass die Befestigungsmutter (4) und die Druckmutter (8) mit dem Aussengewinde (7) des inneren Axialabschnitts (6) in Eingriff bringbar sind, wobei die Druckmutter (8) mit dem Klemmeinsatz (9, 10, 18) wirkverbindbar ist, so dass sie eine axiale Kraft auf den Klemmeinsatz bewirkt.

2. Kabelverschraubung nach Anspruch 1, **dadurch gekennzeichnet, dass** der innere Axialabschnitt (6) im Inneren zumindest abschnittsweise gewindefrei ist.

3. Kabelverschraubung nach Anspruch 1 oder 2, **dadurch gekennzeichnet, dass** die Druckmutter (8) einen radial nach innen gerichteten Flansch (11) aufweist, welcher beim Anbringen der Druckmutter (8) auf das Aussengewinde (7) des inneren Axialabschnitts (6) eine axiale Kraft auf den Klemmeinsatz (9, 10, 18) ausübt.

4. Kabelverschraubung nach einem der vorangehenden Ansprüche, **dadurch gekennzeichnet, dass** der Klemmeinsatz (9, 10, 18) ein Druckhülse (9) und einen Dichteinsatz (10) aufweist, wobei die Druckhülse (9) im Innern des Stutzens (3) in axialer Richtung verschiebbar angeordnet ist, so dass sie einen durch die Druckmutter (8) erzeugte axiale Kraft auf den Dichteinsatz (10) überträgt.

5. Kabelverschraubung nach einem der vorangehenden Ansprüche, **dadurch gekennzeichnet, dass** der Stutzen (3) im Bereich des Flansches (5) einen Innenkonus (12) aufweist.

6. Kabelverschraubung nach einem der vorangehenden Ansprüche, **dadurch gekennzeichnet, dass** der Flansch (5) einen Aussenkonus aufweist vorzugsweise mit einem Winkel von etwa 20 Grad, welcher in die Durchgangsöffnung übergeht.

7. Kabelverschraubung nach einem der vorangehenden Ansprüche, **dadurch gekennzeichnet, dass** der Flansch (5) gehäuseseitig einen Dichtring (13) aufweist.

8. Kabelverschraubung nach Anspruch 7, **dadurch gekennzeichnet, dass** der Flansch (5) gehäuseseitig eine radial umlaufende Nut (14) aufweist, in welche der Dichtring (13) eingelegt ist.

9. Kabelverschraubung nach Anspruch 8, **dadurch gekennzeichnet, dass** der Dichtring (13) einen L-förmigen Querschnitt aufweist.

10. Kabelverschraubung nach Anspruch 9, **dadurch gekennzeichnet, dass** der äussere Durchmesser des Dichtrings (13) dem äusseren Durchmesser des Flanschs (5) entspricht.

11. Kabelverschraubung nach einem der vorangehenden Ansprüche, **dadurch gekennzeichnet, dass** der Flansch (5) und/oder der innere Axialabschnitt (6) ein Verdrehsicherungsmittel (15, 21, 22, 23) zur Verdrehsicherung beim Aufschrauben der Befestigungsmutter (4) aufweist.

12. Kabelverschraubung nach einem der vorangehenden Ansprüche, **dadurch gekennzeichnet, dass** die Befestigungsmutter gehäuseseitig eine Verzahnung (16) aufweist.

13. Kabelverschraubung nach einem der vorangehenden Ansprüche, **dadurch gekennzeichnet, dass** zwischen Druckmutter (8) und Klemmeinsatz (9, 10, 18) eine ringförmige Gleitscheibe (17) angeordnet ist.

14. Kabelverschraubung nach einem der vorangehenden Ansprüche, **dadurch gekennzeichnet, dass** der Klemmeinsatz (9, 10, 18) weiter eine Kontakthülse (18) zur Kontaktierung EMV abgeschirmter Kabel aufweist, welche innerhalb der Druckhülse (9) angeordnet ist.

15. Kabelverschraubung nach einem der vorangehenden Ansprüche, **dadurch gekennzeichnet, dass** sie eine Anschlusshülse (19) zur Montage von Schutzschläuchen aufweist.

16. Kabelverschraubung nach einem der vorangehenden Ansprüche, **dadurch gekennzeichnet, dass** die Kabelverschraubung anstelle der Befestigungsmutter ein Befestigungselement aufweist, mit welchem der Stutzen (3) in einer Gehäusewandung befestigbar ist.
